# EUROPÄISCHE PATENTSCHRIFT

(11) **EP 0 878 360 B1**
(45) Veröffentlichungstag und Bekanntmachung des Hinweises auf die Patenterteilung: **23.07.2003**
(21) Anmeldenummer: 98106951.1
(22) Anmeldetag: 16.04.1998
(51) Int. Cl.: B60R 21/16

(54) **Seitenaufprallschutzeinrichtung für einen Insassen eines Fahrzeuges**
Side collision protection device for vehicle passenger
Dispositif de protection contre le choc latéral pour occupant de véhicule

(30) Priorität: 16.05.1997 DE 19720584
(43) Veröffentlichungstag der Anmeldung: 18.11.1998
(73) Patentinhaber: Dr.Ing.h.c. F. Porsche Aktiengesellschaft, 70435 Stuttgart (DE)
(72) Erfinder: Heinz, Martin, 70182 Stuttgart (DE)

(56) Entgegenhaltungen:
- EP-A- 0 523 704
- DE-A- 4 443 027
- DE-U- 9 408 908
- GB-A- 2 293 355

## Beschreibung

Die Erfindung betrifft eine Seitenaufprallschutzeinrichtung für einen Insassen eines Fahrzeuges, die ein aufbauseitig befestigtes Gehäuse, einen Gasgenerator und einen Gassack umfaßt, wobei innerhalb des Gassackes eine Trennwand mit einer Sperrwirkung für die vom Gasgenerator austretende Gasströmung vorgesehen ist und an der Trennwand eine Hauptdurchströmöffnung ausgebildet ist.

Eine Seitenaufprallschutzeinrichtung der eingangs genannten Gattung geht aus der DE 44 43 027 A1 hervor. Durch den Abstand zwischen der vertikalen Schwerpunktachse von Gasgenerator und Gehäuse zur vertikalen Mittelachse der Hauptdurchströmöffnung entsteht beim Aufblasen des Gassackes unterhalb der Trennwand ein Aufstellmoment für den Gassack, welches die Tendenz hat, den Gassack weiter nach vorne hin aufzustellen als in die gewünschte ideale Betriebsstellung. Unterstützt wird diese Tendenz dadurch, daß der Insasse beim Kontakt mit dem Gassack diesen zusammendrückt.

Aufgabe der Erfindung ist es, solche Vorkehrungen zu treffen, daß ein mit einer innenliegenden Trennwand und einer versetzt zum Gasgenerator an der Trennwand vorgesehenen Hauptdurchströmöffnung versehener Gassack im aufgeblasenen Zustand seine ideale Betriebsstellung einnimmt.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch den verdrehten Einbau des Gassackes am Gasgenerator das auftretende Moment beim Aufblasen des Gassackes kompensiert wird und der aufgeblasene Gassack nicht über seine ideale Betriebsstellung hinaus nach vorne verlagert wird, wodurch die Betriebssicherheit der Seitenaufprallschutzeinrichtung erhöht wird.

Ein Ausführungsbeispiel der Erfindung ist in den Zeichnungen dargestellt und wird im folgenden näher erläutert.

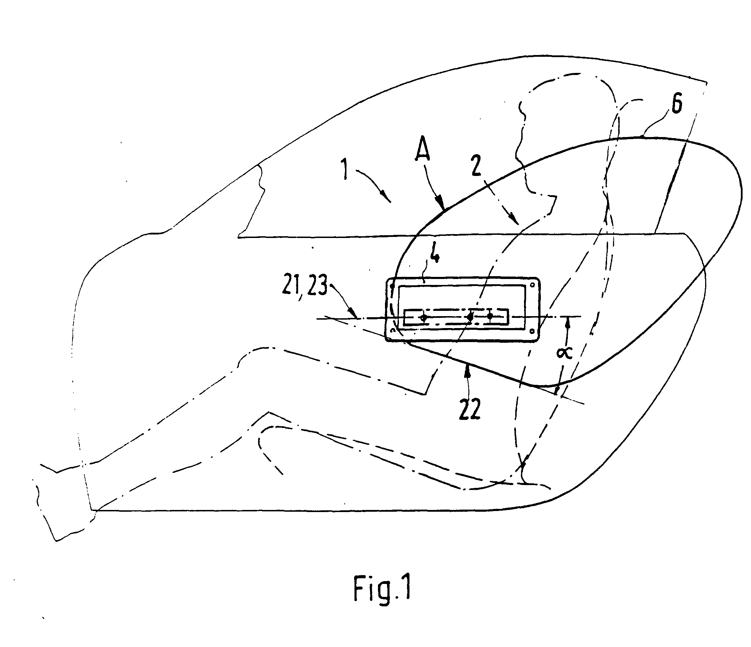

Es zeigt
- Fig. 1: eine Teilseitenansicht auf eine Seitenaufprallschutzeinrichtung für einen Insassen, wobei der Gassack eine theoretische, nicht zusammengefaltete Einbaulage einnimmt,

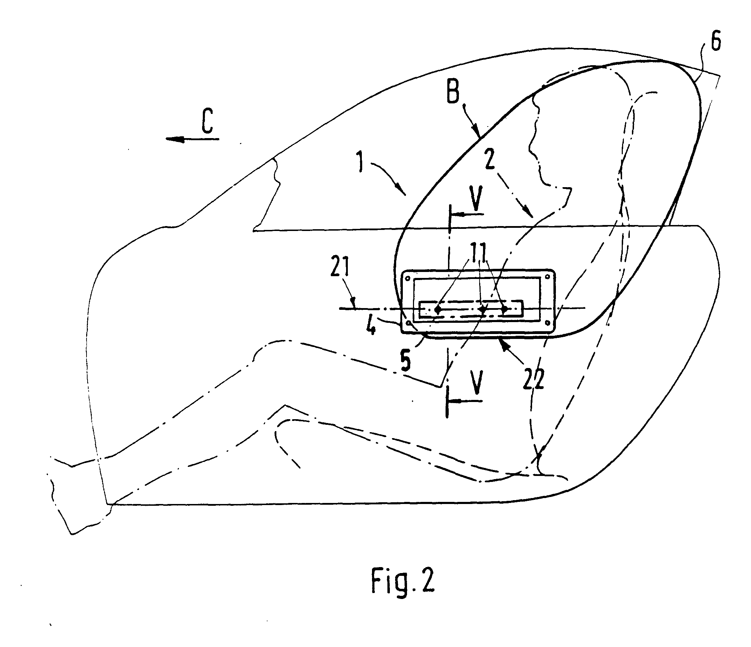

- Fig. 2: eine Teilseitenansicht entsprechend Fig. 1, jedoch nimmt hier der Gassack eine ideale aufgeblasene Betriebsstellung ein,

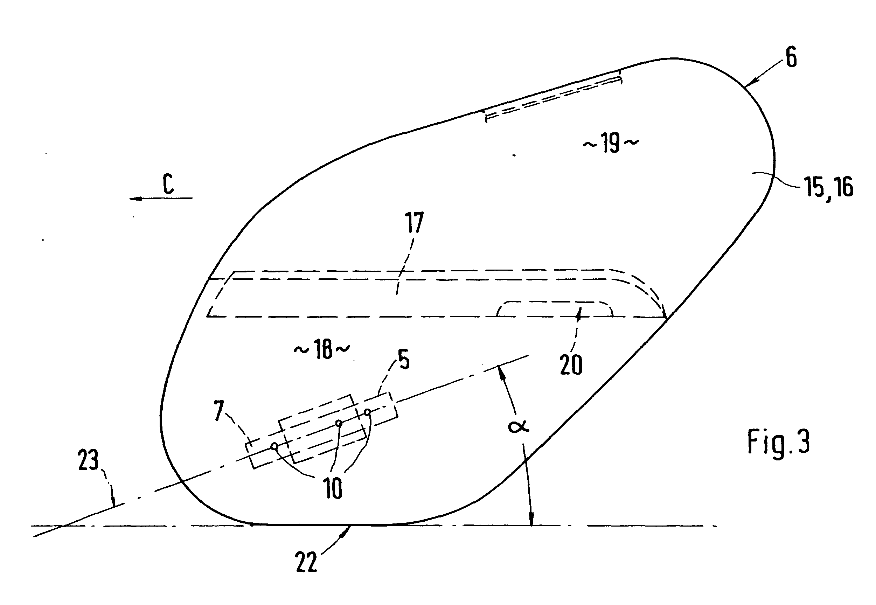

- Fig. 3: eine Seitenansicht auf den Gassack und den Rohrgenerator in nicht zusammengefalteter Stellung in größerer Darstellung,

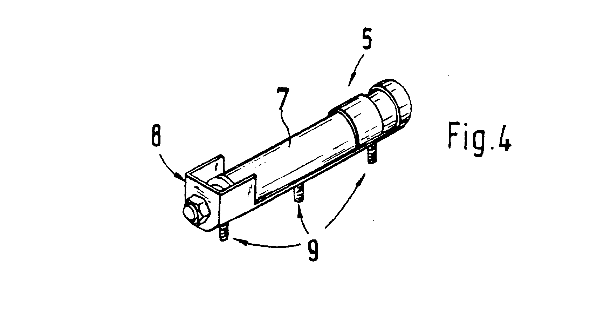

- Fig. 4: eine perspektivische Ansicht auf den Gasgenerator mit dem Generatorträger und

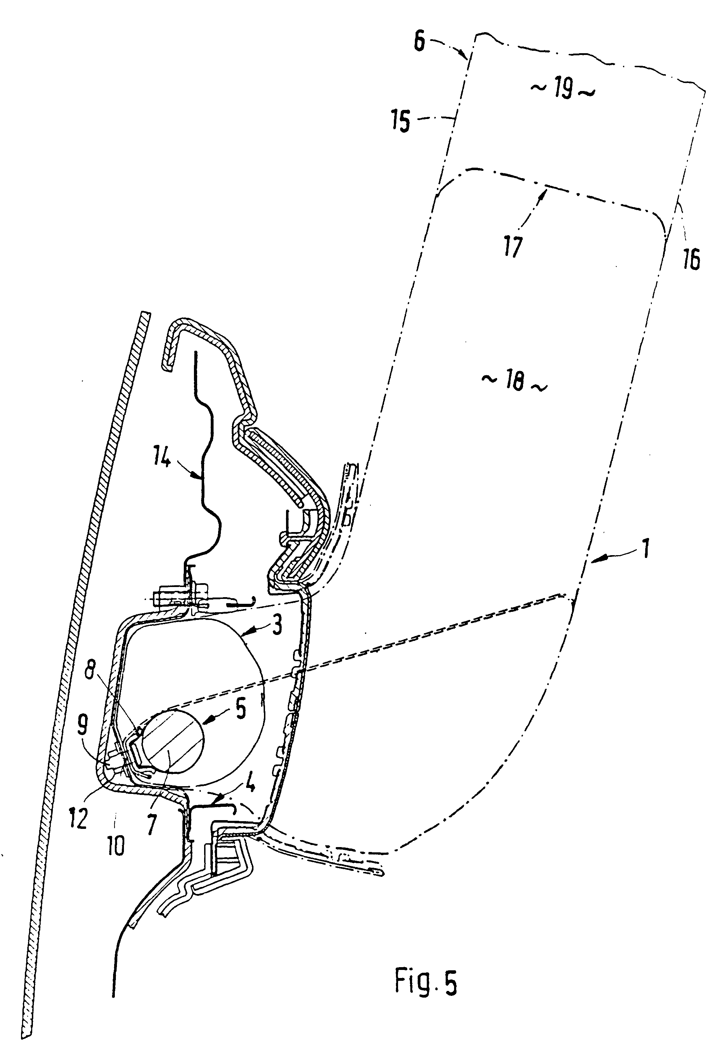

- Fig. 5: einen Schnitt nach der Linie V-V der Fig. 2 in größerer Darstellung.

Eine Seitenaufprallschutzeinrichtung 1 für einen Insassen 2 eines Fahrzeuges umfaßt ein vorgefertigtes Einbaumodul 3, das sich aus einem Gehäuse 4, einem Gasgenerator 5 und einem Gassack 6 zusammensetzt. Im Ausführungsbeispiel wird der Gasgenerator 5 durch einen langgestreckten Rohrgenerator 7 gebildet, wobei der Rohrgenerator 7 an einem Generatorträger 8 in Lage gehalten ist. Der Generatorträger 8 weist auf der dem Rohrgenerator 7 abgekehrten Seite mehrere beabstandete Schraubbolzen 9 zur Befestigung am Gehäuse 4 auf. Die Schraubbolzen 9 des innerhalb des Gassackes 6 angeordneten Generatorträgers 8 samt Rohrgenerator 7 sind durch korrespondierende Öffnungen 10,11 des Gassacks 6 und des Gehäuses 4 hindurchgeführt. Auf das vorstehende freie Ende der Schraubbolzen 9 werden von außen her Muttern 12 aufgeschraubt.

Das langgestreckte, in Höhenrichtung gesehen relativ flache Gehäuse 4 des Einbaumoduls 3 ist im Ausführungsbeispiel abschnittsweise in einen rechteckförmigen Ausschnitt 13 eines Türinnenblechs 14 eingesetzt und am Türinnenblech 14 durch Schrauben, Nieten oder dergleichen befestigt.

Der aus zwei etwa gleich großen übereinanderliegend angeordneten, randseitig miteinander vernähten Gewebelagen 15, 16 bestehende Gassack 6 ist durch eine Trennwand 17 in zwei angrenzende Kammern 18, 19 unterteilt, wobei an der Trennwand 17 entfernt vom Gasgenerator 5 zumindest eine Hauptdurchströmöffnung 20 zwischen beiden Kammern 18, 19 vorgesehen ist.

Die zur Lenkung des aus dem Gasgenerators 5 austretenden Gasstroms benutzte Trennwand 17 kann auch durch ein oder mehrere Fangbänder gebildet werden. Damit bei einem Seitenaufprall der von einer Einbaulage A in eine aufgeblasene Betriebsstellung verlagerbare Gassack 6 nicht über die "ideale Betriebsstellung B" hinweg nach vorne bewegt wird, ist erfindungsgemäß vorgesehen, daß der Gassack 6 in der Einbaulage A verdreht zum Gehäuse 4 bzw. zum Gasgenerator 5 eingebaut wird und zwar entgegen dem beim Aufblasen im Gassack wirkenden Aufstellmoment um einen Winkel α.

Im Ausführungsbeispiel liegen die drei durch die Öffnungen 11 gebildeten Befestigungspunkte für den den Gasgenerator 5 tragenden Generatorträger 8 am Gehäuse 4 - in der Seitenansicht gesehen - auf einer etwa horizontalen, sich in Fahrzeuglängsrichtung erstreckenden Hilfsebene 21. Die korrespondierenden, durch die Öffnungen 10 gebildeten Befestigungspunkte am Gassack 6 sind im Anlieferungszustand des Gassackes 6 nicht wie allgemein üblich parallel zu einer unteren, etwa horizontal ausgerichteten Begrenzungskante 22 des Gassacks 6 ausgerichtet, sondern sie liegen auf einer Hilfsebene 23, die unter dem Winkel α zur unteren Begrenzungskante 22 des Gassacks nach hinten oben hin ansteigt. Der Winkel α wird empirisch ermittelt und beträgt vorzugsweise etwa 20 ± 10°.

Beim Zusammenbau von Gasgenerator 5, Gassack 6 und Gehäuse 4 wird also der Gassack 6 durch das deckungsgleiche Übereinanderliegen der beiden Hilfsebenen 21, 23 um den Winkel α verdreht eingebaut, so daß in der Einbaulage A die untere Begrenzungskante 22 des Gassacks 6 in Fahrtrichtung C gesehen mit ihrem hinteren Ende nach unten hin abfällt.

## Patentansprüche

1. Fahrzeug mit Seitenairbagmodul für den Insassen des Fahrzeuges, das in einem Gehäuse einen Gasgenerator und einen Gassack umfaßt, wobei innerhalb des Gassacks eine Trennwand mit einer Hauptdurchströmöffnung ausgebildet ist, die annähernd parallel zur Unterkante des Gassackes verläuft, **dadurch gekennzeichnet, daß** der Gassack (6) in seiner ausgebreiteten Ruhelage (A) mit seiner Unterkante (22) um einen Winkel (α) zur Achse (21) des in etwa horizontal ausgerichteten Rohrgasgenerators (5) derart verdreht eingebaut ist, daß beim Aufblasen des Gassackes (6) (Betriebsstellung B) durch Anströmen der Trennwand (17) ein Drehmoment erzeugt wird, so daß die Unterkante (22) des Gassackes (6) parallel zur Längsachse (21) des Rohrgasgenerators (5) zu liegen kommt.

2. Fahrzeug nach Anspruch 1, **dadurch gekennzeichnet, daß** der Winkel (α) 20°+/-10° beträgt.

3. Fahrzeug nach Anspruch 1 oder 2, **dadurch gekennzeichnet, daß** die untere Begrenzungskante (22) des Gassackes (6) in der ausgebreiteten Ruhelage (A) um den Winkel (α) - in Bezug auf die Fahrtrichtung (C) - nach hinten unten abfällt.

## Claims

1. A vehicle with a side airbag module for the occupant of the vehicle, comprising a gas generator and an airbag in a housing, wherein a partition with a main flow opening is formed inside the airbag and extends substantially parallel to the bottom edge of the airbag, **characterised in that** the airbag (6) is installed in its unfolded normal position (A) with its bottom edge (22) rotated through an angle (α) relative to the axis (21) of the substantially horizontally arranged tubular gas generator (5), and **in that** a turning moment is generated by gas striking the partition (17) when the airbag (6) is inflated (operating position B) so that the bottom edge (22) of the airbag (6) comes to lie parallel with the longitudinal axis (21) of the tubular gas generator (5).

2. A vehicle according to claim 1, **characterised in that** the angle (α) is 20° +/- 10°.

3. A vehicle according to claim 1 or 2, **characterised in that** the lower boundary edge (22) of the airbag (6) in its unfolded normal position (A) slopes downwards towards the rear at the angle (α) in relation to the direction of travel (C).

## Revendications

1. Véhicule avec module de coussin glonflable latéral pour l'occupant du véhicule, qui comprend dans un boîtier un générateur de gaz et un coussin à gaz, une paroi de séparation présentant à l'intérieur du coussin à gaz une ouverture d'écoulement principale étant formée, qui s'étend sensiblement parallèlement au bord inférieur du coussin à gaz, **caractérisé en ce que** le coussin à gaz (6), dans sa position de repos déployée (A), est installé avec son bord inférieur (22) selon un angle (α) par rapport à l'axe (21) du générateur de gaz tubulaire (5) d'une manière tordue telle que lors du gonflage du coussin à gaz (6) (position de fonctionnement B) un couple de rotation est généré par soufflage sur la paroi de séparation (17), de telle sorte que le bord inférieur (22) du coussin à gaz (6) se place parallèlement à l'axe longitudinal (21) du générateur de gaz tubulaire (5).

2. Véhicule selon la revendication 1, **caractérisé en ce que** l'angle (α) est de 20° +/- 10°.

3. Véhicule selon la revendication 1 ou 2, **caractérisé en ce que** le bord de délimitation inférieur (22) du coussin à gaz (6) descend dans la position de repos déployée (A) selon l'angle (α) - par rapport au sens de déplacement (C) - vers l'arrière en bas.
